# EUROPEAN PATENT APPLICATION

(11) **EP 1 684 225 A1**
(43) Date of publication of application: **26.07.2006**
(21) Application number: 05001343.2
(22) Date of filing: 24.01.2005
(51) Int. Cl.: G06Q 10/00, G07F 19/00

(54) **Data processing system and method of providing a payment**

(71) Applicant: SAP AG, 69190 Walldorf (DE)
(72) Inventor: Sachs, Gernot, 69168 Wiesloch (DE)
(74) Representative: Richardt, Markus Albert

(57) **Abstract**

The present invention relates to a data processing system comprising:
(a) means (102) for storing open payment items, each open payment item being assigned to an identifier,
(b) means ( 104) for storing user authorizations, each user authorization specifying a sub-set of the identifiers,
(c) means (108) for storing user specific totals of payment amounts that have been collected by the users from payers,
(d) communication means (114) for reporting receipt of the retrieved open payment item (122, 128,...),
(e) means (100, 108) for adding the open payment item for which payment has been received by the user from the payer to the user specific total of the respective user,
(f) means (100) for initiating transfers of the user specific totals from bank accounts (132) of the respective users to the payee's bank account (136),
(g) means (100) for resetting a user specific total after a transfer has been initiated.

## Description

### Field of the invention

The present invention relates to the field of data processing systems, and more particularily to data processing systems for the collection of open payment items.

### Background and prior art

The insurance service industry expends large amounts of resources, including facilities, equipment and staff, for collecting unpaid insurance premiums. This includes usage of outside collection agencies.

For example, US 5,991,733 shows a computerized method of managing insurance receivable accounts. The method provides a combination of specific automation enablers and unique ruled based decision tools which are used to maximize recovery of the insurance receivable accounts. The method includes automation of collection strategies based in part on an automated decision support tool, for objective evaluation of data relating to any collection related decisions or activities, and a historical data warehouse, for comparison to all other insurance receivable accounts recorded. The computerized system entails a local area network of workstations, database server, file server, input devices, output devices configured by software for accumulating, processing, administering and analyzing premium insurance collection accounts in an automated workflow process environment. The computerized system provides, among other capabilities, for cases processed in-house by collectors, automation respecting scripted dispute handling, on-line payment plan capabilities, electronic data transfer and, collection strategy development, for cases referred to an outside collection agency or attorney, automation respecting facsimile generations, legal strategy development, in-house attorney reviews and monitoring, electronic data transfers to local counsel, evaluation of the next step to be undertaken and, access to a bankruptcy database.

Similar prior art methods are know from U.S. Pat. No. 5,444,61 5, entitled "Attorney Terminal Having Outline Preparation Capabilities For Managing Trial Proceeding", issued to Bennett et al which concerns attorney terminals having outline capabilities for case evidence, case law and work product for a lawsuit. U.S. Pat. No. 5,136,502, entitled "System For Funding, Analyzing And Managing Health Care Liabilities", issued to Van Remortel et al relates to a system for funding and managing retiree health care benefits. U.S. Pat. No. 5,191,522, entitled "Integrated Group Insurance Information Processing And Reporting System Based Upon An Enterprise-Wide Data Structure", issued to Bosco et al concerns an integrated information processing storage system for processing and supervising a plurality of group insurance accounts. U.S. Pat. No. 4,831,526, entitled "Computerized Insurance Premium Quote Request And Policy Issuance System", issued to Luchs et al concerns a computerized system for processing and preparing applications for insurance and premium quotations and for preparing and writing insurance contracts.

A common disadvantage of prior art computer system for collection of such payments is the lack of seamless interaction between the insurance company's computer system and the outside collection agency's computer system. Similar problems exists in other industries, such as utility industries and telecommunication industries, namely for the collection of payments for gas, electricity or telecommunication charges.

### Summary of the invention

In accordance with the present invention there is provided a data processing system comprising means for storing open payment items, each open payment item being assigned to an identifier. The data processing system has means for storing user authorizations where each user authorization specifies a sub-set of the identifiers. The data processing system stores user specific totals of payment amounts that have been collected by the users from payers. It has communication means adapted for receiving a user selection of one of the identifiers of the sub-set of identifiers of the user's user authorization, for retrieval of the respective open payment item, transmitting the open payment item to the user's client device, and for receiving data indicative of the user's receipt of the open payment item from the payer. The open payment item for which payment has been received is added to the user specific total. A transfer of the user specific total from the user's bank account to a payee's bank account is initiated. After the initiation of the transfer the user specific total is reset.

For example, each identifier is assigned to a specific contract. The contract specifies a payment amount and due dates for the payments, such as regular payments of premiums to be made for an insurance contract. Respective open items are stored in the data processing system.

The present invention is particularly advantageous as it facilitates the usage of outside collection agencies or agents for the collection of payments for open payment items. An outside collection agency or agent has an assigned user authorization that specifies a sub-set of the identifiers. In other words, the set of all contracts is split into sub-sets and the sub-sets are assigned to different users. This facilitates the establishment of a network of collection agencies or collection agents where each collection agency or collection agent has a well defined scope of responsibility for collecting open payment items for the respective sub-set of contracts.

The payments that are collected by a specific collection agency or collection agent are summed up for each such collection agency or agent individually. The total amount of reported payments that have been received by the collection agency or agent is transferred from the bank account of the collection agency or agent to the payee's bank account. For example, the bank transfer is initiated after the end of each business day, at periodic intervals, or when the total amount of reported payments has reached a certain upper threshold level. After the bank transfer has been initiated, the respective user specific total is reset to zero and the aggregation of the reported payments restarts until a new bank transfer is initiated, etc.

In accordance with an embodiment of the invention each collection agency or collection agent can have one or more sub-collection agencies or agents to which the main collection agency or agent can delegate a sub-set of the payments to be collected. The payments collected by the sub-collection agencies or sub-agents are aggregated together with the payments collected by the main collection agency or agent and the total amount of the payments collected by the main collection agency/agent and its sub-collection agencies/agents is deducted from the bank account of the main collection agency/agent. The money transfer of payments collected by the sub-collection agencies/agents to their respective main collection agency/agent can be performed in various ways and can be done with or without the data processing system of the invention.

In accordance with an embodiment of the invention the reporting of payments received by an outside collection agency/agent or sub-collection agency/agent is performed using a web-portal. This has the advantage that the outside collection agency/agents do not require special computer software. Rather, a standard browser program, such as Microsoft Internet Explorer or Netscape Navigator, is sufficient for accessing the web-portal functionalities. For example, the web-portal can provide a data entry field for entering a user's selection of one of the contract identifiers. In response any open payment items for the selected contract are retrieved and displayed. After the user, i.e. the outside collection agency or agent, has received the respective payment, this is reported to the data processing system by entering respective data indicative of the receipt of the open payment item into the web-portal.

In accordance with an embodiment of the invention the selection of one of the contracts is facilitated by means of a pull-down menu that only contains identifiers of the sub-set of identifiers within the scope of the user's authorization.

In accordance with an embodiment of the invention the web-portal provides a virtual cash journal for each user and for each sub-user, if any. This facilitates the collection of payments in the form of cash and/or checks.

It is to be noted that the present invention can be used for the collection of open payment items in various industries. Preferred fields of application of the present invention include collection of insurance premiums, utility invoices, such as payments of gas, electricity or telecommunication charges, or for other payments that have to be made at regular or irregular intervals and which are to be collected by a network of outside collection agencies and/or sub-agencies or agents.

### Brief description of the drawings

In the following preferred embodiments of the invention will be described by way of example only making reference to the drawings in which:
- Figure 1: is a block diagram of an embodiment of a data processing system of the invention,
- Figure 2: is a flowchart illustrating an embodiment of a method of the invention,
- Figure 3: is a flowchart illustrating a further embodiment of a method of the invention,
- Figure 4: schematically shows a window generated by a web-portal for a user's reporting of payments that have been received.

### Detailed description

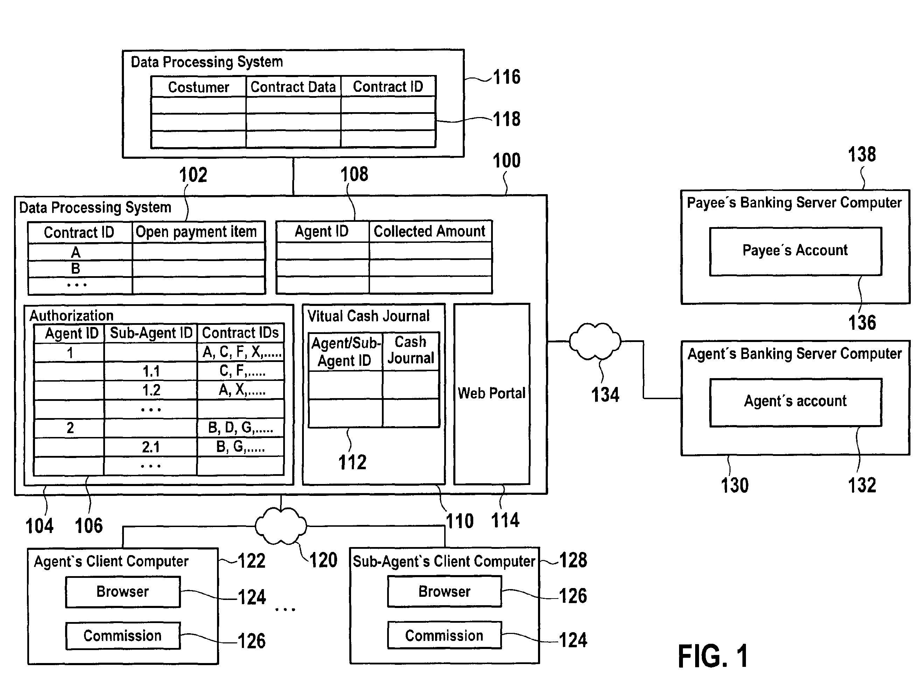

Fig. 1 shows a data processing system 100 that acts as a virtual hub for the collection of open payment items and providing of the collected payments to a payee. The data processing system 100 has a database table 102 that contains a number of identifiers and open payment items that are assigned to the identifiers. For example, each identifier unequivocally identifies a specific contract that exists between the payee and a payer. An open payment item that has become due for the contract identified by a given identifier is assigned to that identifier in the database table 102.

The data processing system 100 has an authorization component 104 for storing of user authorizations. The users of the data processing system 100 are outside collection agencies or outside collection agents, or sub-collection agencies/agents. The database table 106 of the authorization component 104 specifies sub-sets of the contract identifiers stored in the database table 102 for the various agencies/agents. The term "agent" as used hereinafter can relate both to outside collection agencies and/or outside collection agents.

For example, one of the agents has agent identifier (ID) "1". A number of contract identifiers (IDs) are assigned to the agent ID "1", namely contract IDs A, C, F, X, ...

The agent with the agent ID "1" has a number of sub-agents. For example, one of the sub-agents of agent "1" has the sub-agent ID "1.1". A sub-set of the sub-set of contract IDs assigned to the agent "1" is assigned to the sub-agent "1.1" in the database table 106, i.e. contract IDs C, F, ... in the example considered here. Likewise another sub-set of the sub-set of contract IDs assigned to the main agent "1" is assigned to another sub-agent "1.1", i.e. A, X, ... in the example considered here.

Likewise other sub-sets of contract IDs are assigned to other agents and sub-agents such as agent "2" and sub-agent "2.2" as illustrated in Fig. 1.

Further, the data processing system 100 has a database table 108 for storage of user specific totals of payment amounts that have been collected by the respective users, i.e. agents, from payers. The "collected amount" that is assigned to a given agent ID in the database table 108 is the accumulated payment amount that has been collected by the respective agent, i.e. the total of all payments collected after the "collected amount" had been reset. After determination of the "collected amount" a respective open payment item is created for the agent that has performed the collection of the payments in the database table 102,

The data processing system 100 has a virtual cash journal component 110. The virtual cash journal component 110 provides a virtual cash journal for each registered agent and/or sub-agent. For example, the virtual cash journal component 110 has a database table 112 that contains virtual cash journal data assigned to the agent ID or sub-agent ID of the respective agent's or sub-agent's cash register. For example, the virtual cash journal data comprises postings of received cash or check payments and postings of amounts taken from the cash register by the agent or sub-agent. Further, the virtual cash journal data comprises the cash balance of the respective agent's or sub-agent's cash register.

Further, the data processing system 100 has a web-portal component 114 for providing a web-portal for interaction with the agent's and sub-agent's client computer systems.

A data processing system 116 is coupled to the data processing system 100. The data processing system 116 has a database table 118. The database table 118 contains customer master data, such as customer name and address and contract data, e.g. a payment amount and due dates when the payment amount becomes due to be paid to the customer's contract partner, i.e. the payee or the payee's collection agent. Each contract has assigned an identifier that unequivocally identifies the contract within the complete set of contracts administered by the data processing system 116.

Contract data that is necessary for identification of open payment items is exported from the data processing system 116 to the data processing system 100. By means of this contract data the data processing system generates the database table 102 that contains the open payment items for the various contracts.

The collection of the payments from the customers of the payee is performed by a network of agents and sub-agents. The communication between the agents and the data processing system 100 is performed via a computer network 120, such as the Internet.

For example, agent with agent ID "1" has a client computer 122 for connecting to the web-portal 114 via the computer network 120. Preferably this is done using the standard browser program 124 of the client computer 122 in order to avoid a need for special software. The client computer 122 may or may not have a program component 126 for calculating the agent's commission for the collection of reported payments. It is preferred that the functionality of the program component 126 is also integrated into web-portal 114 in order to avoid a need to install the program component 126 on each of the client computers used by the agents and sub-agents. In the example considered here the sub-agent "1.1" of agent "1" has client computer 128 which has substantially the same design as the client computer 122.

The data processing system 100 can be coupled to the banking server computers of the various agents in order to transfer the collected amount of payments that have been collected by an agent to the payee's account. Fig. 1 shows a banking server computer 130 of e.g. agent's "1" bank which runs this agent's bank account 132. The data processing system 100 can be coupled to the banking server computer 130 via a computer network 134 which can be identical to the computer network 120.

The data processing system 100 can send a request to the banking server computer 130 for transfer of the collected amount of payments that have been collected by the respective agent, i.e. agent "1" in the example considered here, in order to transfer the collected amount from the agent's bank account 132 to the payee's bank account 136 that is run by a banking server computer 138 of the payee's bank. Typically the agent's commission for the collected payments is deducted from the collected amount. This can be done by the agent's client computer when payments are reported or by the data processing system 100.

The data processing system 100 can have a reallocation component (not shown in the drawing) for temporarily or permanently reassigning contract or set of contracts from one agent to another. For example, the reallocation component is useful for temporarily assigning the contracts of agent "1" to e.g. agent "2", when agent "1" is on vacation.

Any commissions payable by the payee to the agents and/or any commissions payable by an agent to its sub-agent can be determined by the data processing system 100 or by another data processing system (not shown in the drawing) coupled to the data processing system 100. In the latter case the data processing system 100 receives the commission amounts assigned to specific agents or sub-agents from the other data processing system. The agent's commission reduces the payment amount to be transferred from the agent's bank account 132 to the payee's bank account 136.

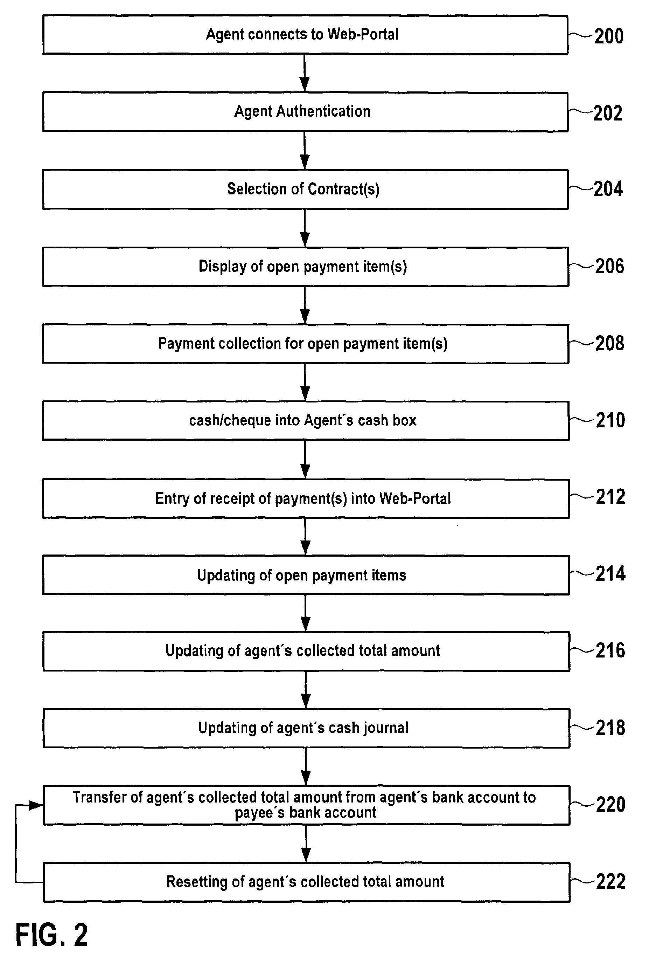

Fig. 2 illustrates a mode of operation of the data processing system 100 of Fig. 1. In step 200 one of the agents connects to the web-portal (cf. web-portal 114) by means of his or her client computer. In step 202 the agent is authenticated, such as by entering his or her password and user ID. In step 204 the agent selects one or more contracts. This can be done by manually entering the respective contract IDs or by selecting the contracts from a pull-down menu. Preferably the pull-down menu only contains those contracts or contract IDs which are within the scope of responsibility of the agent considered here as specified in the database table 106.

In response to the agent's selection of one or more of the contracts, open payment items which are due for payment for these contracts are retrieved from the database table 102 and displayed on the agent's client computer (step 206). In step 208 the agent collects the payment or payments for the open payment item or items from the payee's customer.

The agent puts the respective cash or check payment into his or her cash box or cash register (step 210). In step 212 the agent reports the receipt of the payment or payments to the web-portal. In response the web-portal posts the reported payments and updates the database table 102 with respect to the open payment items correspondingly (step 214). In step 216 the total payment amount collected by the agent is updated by adding the total amount of the payment(s) received in step 208 to the collected amount stored in the database table 108 for the considered agent. The agent's commission is deducted from the total collected amount. Further, the cash or check payment received by the agent in step 210 is posted in the agent's virtual cash journal, i.e. in the database table 112 (step 218).

The steps 200 to 218 can be repeated several times during a business day. For example, at the end of a business day step 220 is performed in order to transfer the total of the collected payments that have been collected by the agent during the business day and that have been reported to the web-portal from the agent's bank account to the payee's bank account. In the consecutive step 222 the agent's selected amount stored in the database table 108 is reset to zero.

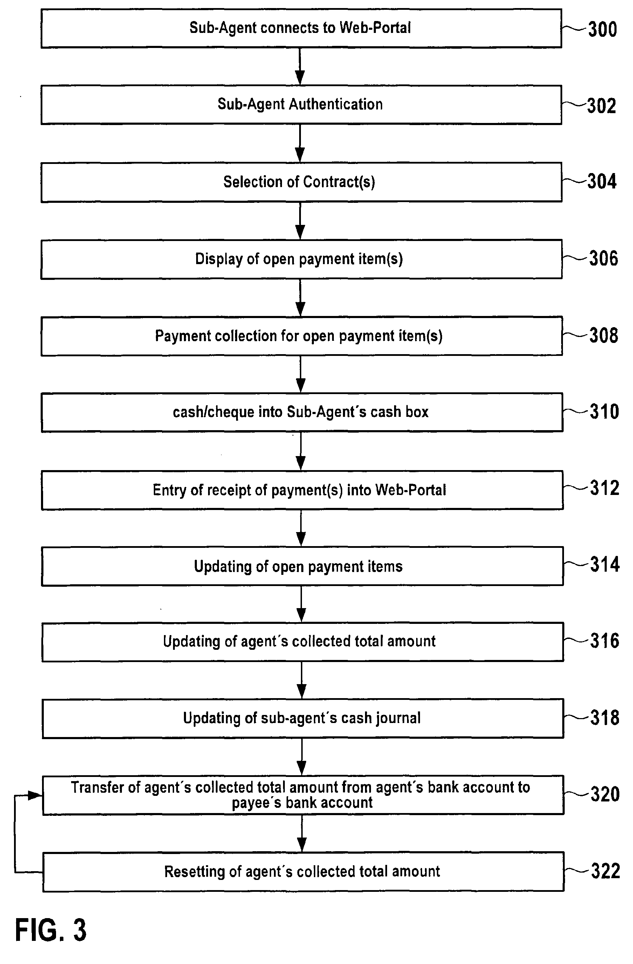

Fig. 3 illustrates substantially the same method with respect to a sub-agent. In step 300 the sub-agent connects to the web-portal. The following steps 302 to 314 are analogous to the steps 202 to 214 of Fig. 2. In step 316 the total amount of the payments collected by the sub-agent is added to the main agent's collected total amount. In other words, there is no separate aggregation of the sub-agent's collected total amounts but only a single collected amount for the main agent and its one or more sub-agents. Hence, step 318 is also analogous to step 218 whereas the steps 320 and 322 are analogous to the respective steps 220 and 222 except that the total collected amount does also contain payments collected by the sub-agents in addition to the payments collected by the agent.

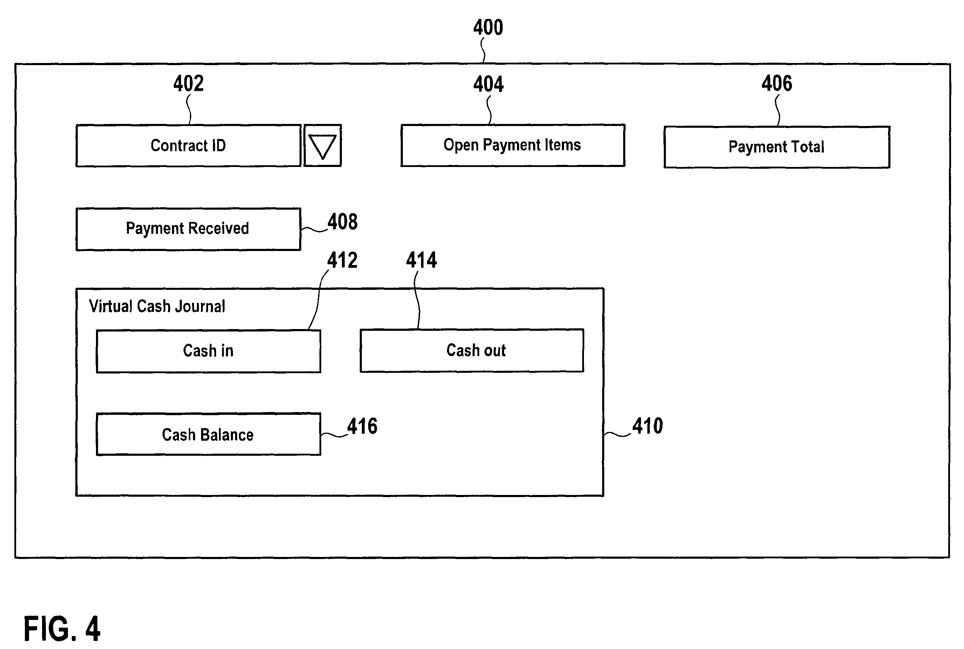

Fig. 4 shows a window 400 of a browser of one of the agent's or sub-agent's client computer, e.g. of browser program 124 as shown in Fig. 1. The window 400 comprises a pull-down menu 402 for the agent's selection of one or more contract IDs, a data field 404 for display of open payment items of the selected contracts and a data field 406 for displaying of the total of the open payment items shown in data field 404. When the agent receives the payment total from the customer, i.e. the payer, the agent clicks on the virtual button 408 in order to report receipt of the payment to the web-portal. In response the web-portal clears the respective open payment item or items from the database table (cf. database table 102 of Fig. 1).

Alternatively a contract is selected by entering the contract ID via a keyboard. This is more convenient in case the agent has many contracts for which he or she is responsible.

The window 400 has a field 410 which provides a virtual cash journal for the agent. The field 410 has a data entry field 412 for entry of a cash amount or the amount of a check that has been received by the agent and which the agent has put into his or her cash box or cash register. Further, the field 410 has a data entry field 414 for entry of an amount taken from the cash box or the cash register from the agent. The data field 416 shows the current cash balance that should match the total of the cash and checks that are currently in the cash box or cash register of the agent.

### List of Reference Numerals

- 100: Data processing system
- 102: Database table
- 104: Authorization component
- 106: Database table
- 108: Database table
- 110: Virtual cash journal component
- 112: Database table
- 114: Web-portal component
- 116: Data processing system
- 118: Database table
- 120: Computer network
- 122: Client computer
- 124: Browser computer
- 126: Program component
- 128: Client computer
- 130: Banking server computer
- 132: Bank account
- 134: Computer network
- 136: Bank account
- 138: Banking server computer
- 400: Window
- 402: Pull-down menu
- 404: Data field
- 406: Data field
- 408: Virtual button
- 410: Field
- 412: Data entry field
- 414: Data entry field
- 416: Data entry field

## Claims

1. A data processing system comprising:
(a) means (102) for storing open payment items, each open payment item being assigned to an identifier,
(b) means (104) for storing user authorizations, each user authorization specifying a sub-set of the identifiers,
(c) means (108) for storing user specific totals of payment amounts that have been collected by the users from payers,
(d) communication means (114) being adapted for:
- receiving a user's selection of one of the identifiers of the sub-set of identifiers of the user's user authorization,
- accessing the means for storing the open payment items with the one of the identifiers for retrieval of the open payment item assigned to the selected one of the identifiers,
- transmitting the retrieved open payment item to a user's client device (122, 128,...),
- receiving data indicative of the user's receipt of the open payment item from the payer,
(e) means (100, 108) for adding the open payment item for which payment has been received by the user from the payer to the user specific total of the respective user,
(f) means (100) for initiating transfers of the user specific totals from bank accounts (132) of the respective users to the payee's bank account (136),
(g) means (100) for resetting a user specific total after a transfer has been initiated.

2. The data processing system of claim 1, the identifier being a contract identifier of a contract between one of the payers and the payee, the contract specifying a payment amount and due date for regular payment of the payment amount, and further comprising a database (118) for storage of payment amounts and due dates specified by the contract.

3. The data processing system of claim 1 or 2, the means for storing user authorizations being adapted to store sub-user authorizations, each sub-user authorization specifying a sub-set of the sub-set of identifiers of the respective user.

4. The data processing system of claim 3, one of the user specific totals containing the aggregated payment amounts that have been collected by the respective user and the one or more sub-users of that user after the respective user specific total has been reset.

5. The data processing system of any one of the preceding claims, the communication means comprising a web-portal (114).

6. The data processing system of claim 5, the web-portal being adapted to generate a pull-down menu (402) for the user's selection of one of the identifiers of the sub-set of the identifiers specified by the respective user authorization.

7. The data processing system of claim 5 or 6, the web-portal being adapted to provide a virtual cash journal (410) for the users.

8. The data processing system of claim 7, the web-portal being adapted to provide a virtual cash journal for each sub-user.

9. The data processing system of any one of the preceding claims, the means for initiating transfers of the user specific totals being adapted to initiate the transfers at pre-programmed points of time or within pre-programmed intervals.

10. A method of providing payment comprising:
- storing open payment items, each open payment item being assigned to an identifier,
- storing user authorizations, each user authorization specifying a sub-set of the identifiers,
- storing user specific totals of payment amounts that have been collected by the users from payers,
- receiving a user's selection of one of the identifiers of the sub-set of identifiers of the user's user authorization,
- accessing the means for storing the open payment items with the one of the identifiers for retrieval of the open payment item assigned to the selected one of the identifiers,
- transmitting the retrieved open payment item to a user's client device (122, 128,...),
- receiving data indicative of the user's receipt of the open payment item from the payer,
- adding the open payment item for which payment has been received by the user from the payer to the user specific total of the respective user,
- initiating a transfer of one of the user specific totals from a bank account (132) of the respective user to the payee's bank account (136),
- resetting the one of the user specific total after a transfer has been initiated.

11. The method of claim 10, the identifier being a contract identifier of a contract between one of the payers and the payee, the contract specifying a payment amount and due date for regular payment of the payment amount, and further comprising storing of payment amounts and due dates specified by the contract in a database (118).

12. The method of claim 10 or 11, further comprising storing sub-user authorizations, each sub-user authorization specifying a sub-set of the sub-set of identifiers of the respective user.

13. The method of claim 12, wherein the open payment items for which payment has been received by the sub-users of a user are added to the user specific total of that user.

14. The method of any one of the preceding claims 10 to 13, wherein a web-portal (114) is used for receiving the user's selection, transmitting the open payment item and receiving the data indicative of the user's receipt of the open payment item.

15. The method of any one of claims 10 to 14, further comprising providing a virtual cash journal (110; 410) for each user.

16. The method of any one of claims 10 to 15, further comprising subtracting an agent's and/or a sub-agent's commission from the collected amount before transfer of the collected amount from the agent's bank account.

17. The method of any one of claims 10 to 16, further comprising initiating the transfer of all collected amounts of all users at substantially the same point of time.

18. A computer program product comprising computer executable instructions for performing a method in accordance with any one of the preceding claims 10 to 17.

19. A method of collection of payments comprising:
- connecting a user's client device (122, 128, ...) to a web-portal (114),
- selecting one identifier of a sub-set of identifiers from a pull-down menu (402), each identifier having an assigned payment item,
- displaying the open payment item assigned to the selected one of the identifiers of the sub-set of identifiers,
- entering data indicative of the user's receipt of the open payment item from a payer.

20. The method of claim 19, further comprising entering the payment that has been received for the open payment item into a virtual cash journal (410) provided on the web-portal.

21. A computer program product comprising computer executable instructions for performing a method in accordance with claims 19 or 20.
